Europäisches Patentamt

(19) European Patent Office

Office européen des brevets

(11) Publication number : **0 543 573 A2**

## (12) EUROPEAN PATENT APPLICATION

(21) Application number : 92310368.3

(22) Date of filing : 13.11.92

(51) Int. Cl.[5] : **G06F 15/72**

(30) Priority : 20.11.91 US 795348

(43) Date of publication of application :
26.05.93 Bulletin 93/21

(84) Designated Contracting States :
DE FR GB

(71) Applicant : EXXON RESEARCH AND
ENGINEERING COMPANY
P.O.Box 390, 180 Park Avenue
Florham Park, New Jersey 07932 (US)

(72) Inventor : Ferguson, Scott Roderick
26 Valley View Drive
Basking Ridge, New Jersey (US)
Inventor : Flannery, Brian Paul
31 River Bend Road
Clinton, New Jersey (US)

(74) Representative : Mitchell, Alan et al
ESSO Engineering (Europe) Ltd. Patents &
Licences Mailpoint 72 Esso House Ermyn Way
Leatherhead, Surrey KT22 8XE (GB)

(54) Producing projected two-dimensional representations of three-dimensional data sets.

(57)    As disclosed herein, projection images of 3D structures are produced from 3D digital information stored in a computer based on fast Fourier transforms and the inverse Projection-Slice Theorem. This approach requires far less computation to produce images than conventional volume rendering methods which rely on ray tracing techniques and offers other advantages in providing access to systematic application of filtering, and optimal use of specialized computers.

FIG. 5

EP 0 543 573 A2

EP 0 543 573 A2

The present invention is a system and method for displaying three-dimensional information on a two-dimensional surface. In one particular application, the invention relates to volume rendering. Volume rendering refers to any method used to visualize three-dimensional data sets. The method described here generates two-dimensional projected images of the object, typically from a sequence of view angles. As practiced the technique utilizes ray tracing along parallel paths through the data set in the direction of an observer located at an arbitrary position. In its most useful form volume rendering occurs by creating a sequence of views from several offset orientations. Generation of the views typically is computationally intense. In fact, it requires such great resources, that, in commercial systems today, projection volume rendering must be done off-line, in a separate computation requiring many hours. Images are generated and stored for later display along a fixed set of view angles. The present invention creates the views using an alternative computational technique (not ray tracing) based on realization that computations of 2D projected images of 3D structures can more rapidly be performed using Fourier based techniques.

According to the invention from one aspect, there is provided a method for producing, on a display device, a projected two-dimensional representation of a three-dimensional data set comprising:

a. storing three-dimensional signal patterns, $f(x_1,x_2,x_3)$, said signal patterns representing the values of at least one physical property associated with a three-dimensional body at regularly spaced grid locations within said body;

b. performing a discrete three-dimensional fast Fourier transform of the object to obtain

$$\hat{f}(\omega_1,\omega_2,\omega_3)$$

where $\omega_1,\omega_2,\omega_3$ are orthogonal coordinates in frequency space corresponding to $x_1,x_2,x_3$ in signal space;

c. determining

$$\hat{f}(\nu_1,\nu_2)$$

where $\nu_1$ and $\nu_2$ are orthogonal coordinates in a plane going through origin in $\omega_1$, $\omega_2$, $\omega_3$ (frequency space) and the plane $\nu_1,\nu_2$ is parallel to the projection plane in physical space;

d. performing an inverse discrete 2D fast Fourier transform on the function

$$\hat{f}(\nu_1,\nu_2)$$

to obtain $g(y_1,y_2)$, the desired image (with the coordinate directions for $y_1$ and $y_2$ parallel to the ones chosen in the $\nu_1,\nu_2$-plane), and

e. displaying said image on a two-dimensional display device.

According to the invention from another aspect, there is provided a system for producing, on a display device, a projected two-dimensional representation of a three-dimensional data set comprising:

a. means for storing three-dimensional signal patterns, $f(x_1,x_2,x_3)$, said signal patterns representing the values of at least one physical property associated with a three-dimensional body at regularly spaced grid locations within said body;

b. means for performing a discrete 3D fast Fourier transform of the object to obtain

$$\hat{f}(\omega_1,\omega_2,\omega_3);$$

where $\omega_1,\omega_2,\omega_3$ are orthogonal coordinates in frequency space corresponding to $x_1,x_2,x_3$ in signal space;

c. means for determining

$$\hat{f}(\nu_1,\nu_2)$$

where $\nu_1$ and $\nu_2$ are orthogonal coordinates in a plane going through origin in $\omega_1$, $\omega_2$, $\omega_3$ (frequency space) and the plane $\nu_1,\nu_2$ is parallel to the projection plane in physical space;

d. means for performing an inverse discrete 2D fast Fourier transform on the function

$$\hat{f}(\nu_1,\nu_2)$$

to obtain $g(y_1,y_2)$, the desired image (with the coordinate directions for $y_1$ and $y_2$ parallel to the ones chosen in the $\nu_1,\nu_2$-plane), and

e. means for displaying said image on a two-dimensional display device.

2

Numerous U.S. patents have been issued for volume visualization systems. The Dividing Cubes system (U.S. 4,719,585) and the Marching Cubes system (U.S. 4,710,876) both derive surface contours from volumetric data for rendering in a geometry display system. The Fourier rendering method employs similar techniques, in that the volume data is stored in computer memory, and resultant views are displayed on a two-dimensional screen. Fourier rendering differs from these two methods in that Fourier rendering produces the projected opacity of the volume, where each point in the data set is assigned a given opacity value, directly producing a two-dimensional image. Dividing Cubes and Marching cubes derive surface contours from volume data by scanning the data for positions where the data values cross a given threshold, producing a geometric representation of the surface in the form of small triangular patches, which are subsequently rendered for display on a two-dimensional screen. The projected opacity images produced by Fourier rendering are directly analogous to x-ray radiographs, where dense objects have higher opacity than objects of lower density. Another difference between the methods is that the Dividing Cubes and Marching Cubes systems scan through the input data in normal Cartesian space, while the Fourier rendering system operates on the data in the Fourier-domain (or frequency space). This method is fundamentally different from previously patented techniques because of this difference. While the different methods each have advantages, Fourier rendering is truly unique and provides significant speed enhancement to projection volume rendering using ray trace methods.

The principal advantage of the present invention is the speed enhancement of the computation, but, as well, the method allows us to impose various imaging strategies based on conventional application of filtering techniques which are less feasible, or more computationally intense, in the ray tracing algorithm. In particular, our method readily allows one to incorporate the vast experience of image processing techniques based on application of digital filters in the Fourier domain.

Volume rendering has many widespread applications, including medical and industrial CT, NMR imaging, engineering and design, display of modeling results in simulations of fluid dynamics, and other scientific computation, electron cloud modeling, and display of seismic and geological data. In fact, any large three-dimensional data set can be visualized using this technique. The usefulness and possibility of performing volume rendering on 3D data sets has given rise to new applications of high speed computers and computational graphics, as evidenced in new classes of high performance graphics workstations. Because of the large scale of computation required to perform volume ray tracing, users must often reduce the size of their data sets to create visualizations in a reasonable amount of time. Or they may acquire data in experimental applications so rapidly that they can only produce volumetric images of a subset of the available data. With our invention, users will be able to perform volume rendering far more rapidly, and larger data sets can be rendered in shorter periods of time.

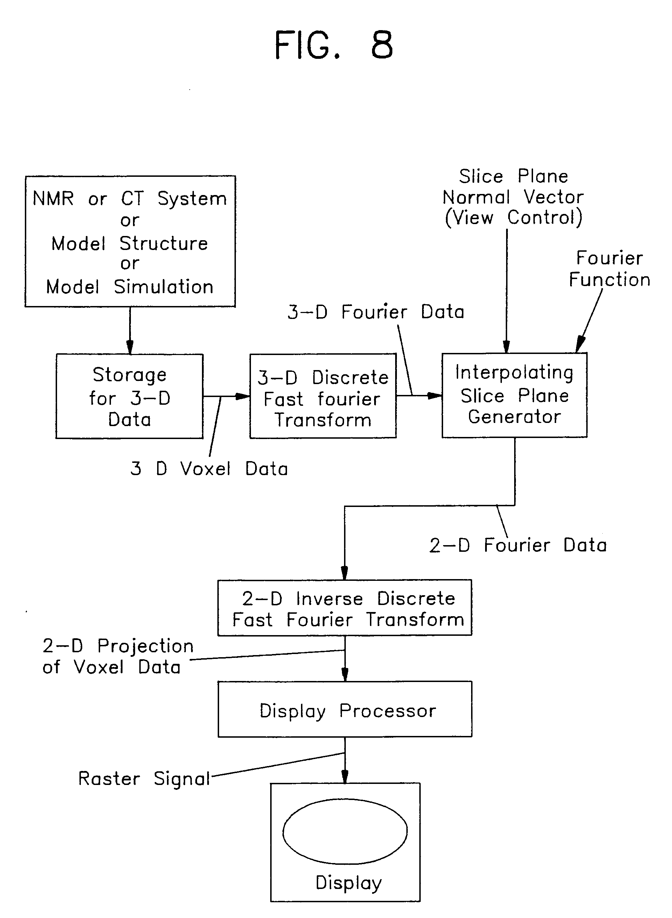

The Fast Fourier Transform (FFT) rendering system and method of the present invention implements the inverse Projection-Slice theorem. The Projection-Slice theorem states that the 2D Fourier transform of a projection through a 3D data field is equal to a 2D slice through the 3D Fourier transform of the data field. This theorem is the foundation of x-ray computed tomography (CT), where a series of x-ray projections are collected and combined to form a 3D image of the specimen or patient. The FFT rendering system is essentially a reverse implementation of CT; a volumetric image is to be projected onto a 2D display. The FFT rendering system employs fast Fourier transforms (FFT's) to implement the inverse Projection-Slice theorem. Opacity projections are obtained by the following procedure (see block diagram in Figure 8):

1. Load a volumetric data set into memory.
2. Assign opacity values to each voxel based on a lookup-table.
3. Perform a 3D Fast Fourier Transform (FFT) on the volumetric data.
4. Filter the data in the Fourier-domain, by applying a transfer function.
5. Choose a viewing direction, which defines a normal vector to a slicing plane in frequency- or Fourier-domain.
6. Interpolate a 2D slicing plane with the given normal vector from the 3D frequency-domain field. Current implementations of the FFT system are using trilinear and tricubic interpolation for this step.
7. Perform an inverse 2D Fast Fourier Transform on the slice plane.
8. Multiply the resultant projection by a windowing function to remove artifacts created by localized interpolation errors from step 5.
9. Display the projection as an image on a two-dimensional screen.

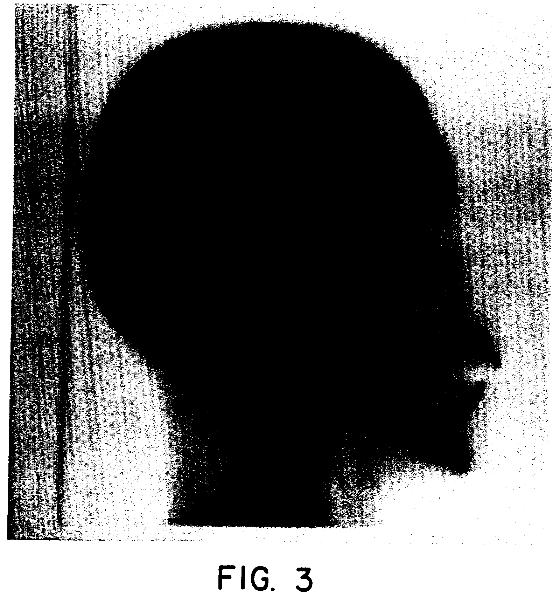

To create multiple views, or to interactively rotate the orientation of projection images, steps 5-9 can be repeated without performing the three-dimensional FFT again. This reduces the number of computations required for each projection to order $O(N^2 \log N)$ for volume data sets of size NxNxN, after the initial 3D FFT has been performed, one time only for any data set. This is the only rendering method which can produce full projections using all $N^3$ voxels with only $O(N^2 \log N)$ operations when the projected image size is NxN. An example projection produced by one way of performing the present invention is shown in Figure 3.

The invention will be better understood by referring, by way of example, to the accompanying drawings, wherein :-

Figure 1 shows a display of a cube of data with only outer faces visible.

Figure 2 shows a display of a cube of data in which the data falls within certain values.

Figure 3 shows a display of data so as to make the object artificially appear semi-transparent.

Figure 4 shows a schematic of the objective of the present invention.

Figure 5 is a schematic illustration of the method used in the present invention.

Figure 6 is a schematic illustration of the method showing the relation between the original data set, its structure in Fourier space, and the projection images.

Figure 7 shows a comparison of the computational time for one way of performing the method of the present invention with the time for volume ray tracing.

Figure 8 shows a schematic of the steps involved in a preferred way of putting into effect the present invention.

Because of rapid advances in both computer modeling and experimental data collection, the problem of displaying large volumes of 3D data is becoming increasingly critical for scientists, engineers, designers, medical diagnosticians and many others.

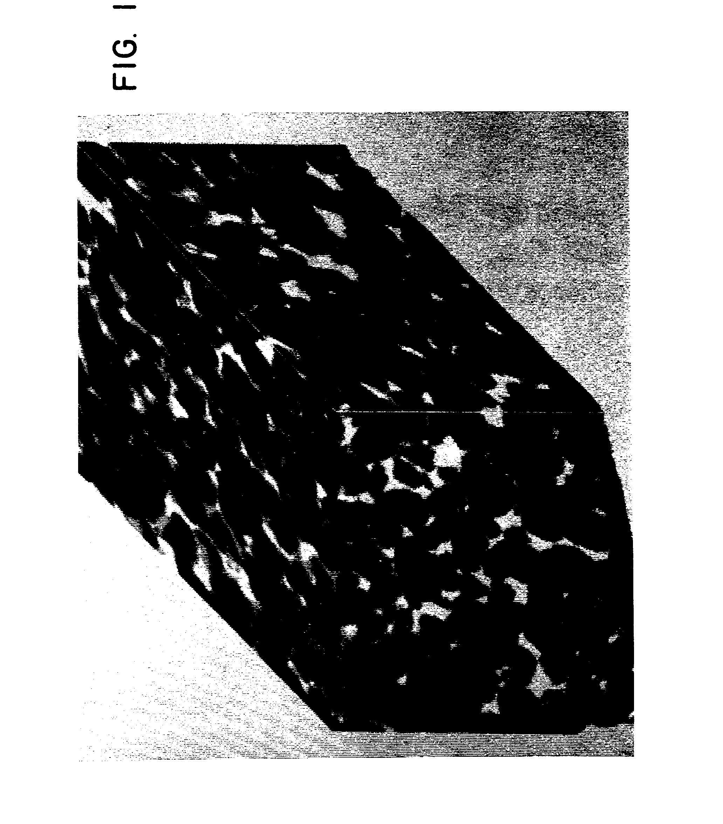

One obvious approach is to simply display a cube of data with only the outer faces visible (as in Figure 1). To view interior data values, a series of such pictures are needed where the cube is removed, slice by slice, from any of the faces. The method is "cheap" ($O(N^2)$ operations per image for an NxNxN cube of data values), but not always suitable in conveying a good impression of three-dimensional structures.

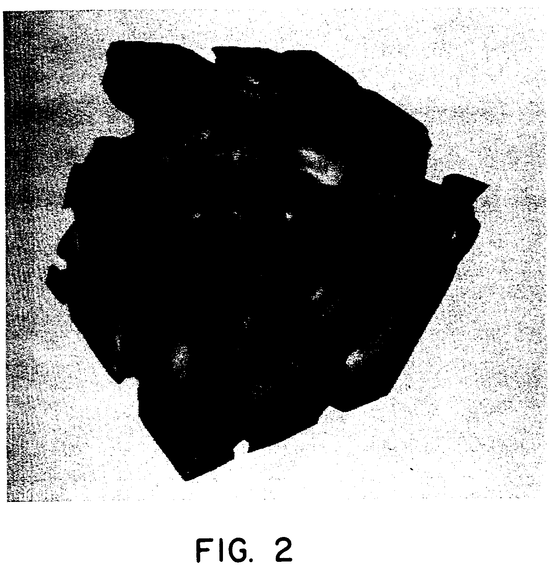

Another idea, known as isosurface rendering, is shown in Figure 2. An algorithm is used to identify contour surfaces through the 3D data set in which the data takes on particular values. This operation defines one or more embedded 2D surfaces, which can be visualized using one of several techniques to illuminate and shade the contour surface. Again (as always) a series of pictures from several view angles, or with differing illumination, are required to convey a sense of depth in the 3D data.

A variation of this approach is to make the object artificially appear semi-transparent (Figure 3). Each view is now reminiscent of a radiographic x-ray image (where we first have manipulated the transparencies of different features to our best advantage). Clearly, all the $N^3$ data elements will take part in the computation of each such picture; with use of straightforward ray-tracing, the total cost is easily seen to be $O(N^3)$ operations (with a quite large constant). The present invention includes a novel algorithm which reduces the cost in this case for each picture down to $O(N^2 \log N)$ operations (following an initial transform costing $O(N^3 \log N)$ operations; performed only once for each object).

With N in the range $10^2$ to $10^3$, the savings with the fast projection volume rendering algorithm typically reach several orders of magnitude. Instead of having to generate the images in long off-line computations and store them for later display, the new method allows volume rendering to be performed interactively (for example allowing the viewer to concentrate on the most interesting viewing positions rather than having to accept some predetermined fixed set of angles, many of which may in retrospect prove of little use).

The fast projection volume rendering method builds on an algorithm for tomographic inversion, using the "projection-slice theorem". This method was seldom used because early studies indicated that it suffered from several problems ('ghost images', etc.). Therefore, a more expensive back-projection approach was used instead in most tomographic applications. However, Roberge and Flannery, U.S. 4,991,093, issued February 5, 1991, showed that these suspected problems could be overcome, and they then used the FFT-based algorithm for micro-tomography. The fast projection volume rendering method of the present invention reverses the steps in this FFT-based tomography method, and extends its application from planar objects in tomography to 3D objects in visualization.

COMPUTATIONAL METHOD

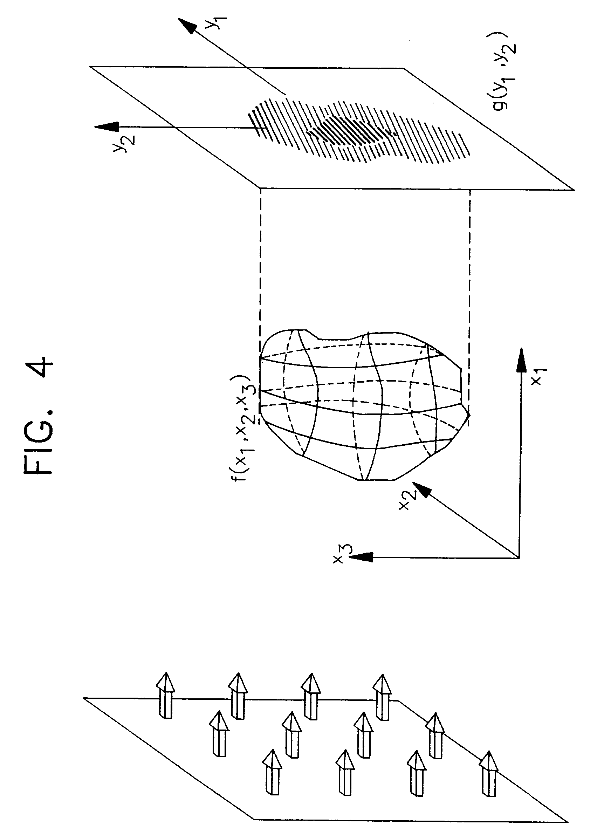

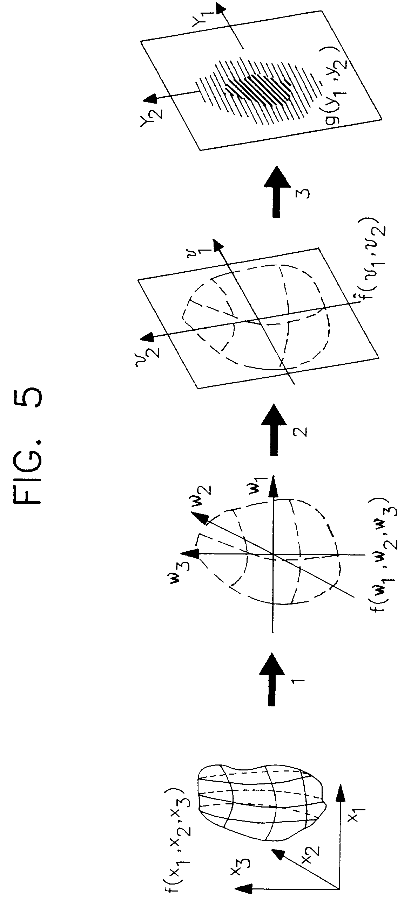

The Appendix supplies a mathematical derivation for the computational approach, summarized below, to compute the 2D projected image, $g(y_1, y_2)$ of a 3D object with variable attenuation coefficient $f(x_1, x_2, x_3)$. As illustrated in Figure 4, the image $g(y_1, y_2)$ corresponds to attenuation of an illuminating beam of uniform, plane parallel radiation passing through the object from a particular direction, perpendicular to the image plane defined by axes $(y_1, y_2)$. The Appendix demonstrates that the 2D Fourier transform of g is identical to a planar section of the 3D Fourier transform of f. The planar section in frequency space passes through the origin, and is oriented at an angle identical to the tilt angle of the projection plane in real space (as shown in Figure 5).

To evaluate projection images of a 3D object from an arbitrary view angle:

1. One time only, perform a 3D Fourier transform of the object to obtain

$$\hat{f}(\omega_1,\omega_2,\omega_3)=\int\limits_{-\infty}^{\infty}\int\limits_{-\infty}^{\infty}\int\limits_{-\infty}^{\infty} f(x_1,x_2,x_3)e^{-2\pi(\omega_1 x_1+\omega_2 x_2+\omega_3 x_3)}dx_1 dx_2 dx_3$$

2. For a given 2D projection, first, find

$$\hat{f}(\nu_1,\nu_2)$$

$\nu_1$ and $\nu_2$ are (orthogonal) coordinates in a plane going through origin in $(\omega_1,\omega_2,\omega_3)$-frequency space and where the orientation of the $(\nu_1,\nu_2)$-plan is parallel to the projection plane $(y_1,y_2)$ in physical space.

3. Then perform an inverse 2D Fourier transform on the function

$$\hat{f}(\nu_1,\nu_2)$$

to obtain the desired image

$$g(y_1,y_2) = \int\limits_{-\infty}^{\infty}\int\limits_{-\infty}^{\infty} \hat{f}(\nu_1,\nu_2)e^{2\pi i(\nu_1 y_1+\nu_2 y_2)}d\nu_1 d\nu_2 \ ,$$

To obtain a practical computational algorithm, approximations have to be made in the three steps of the theoretical algorithm above (see Appendix).

1. Instead of having $f(x_1,x_2,x_3)$ defined at all positions in an infinite space, values are available only at equally spaced locations on a NxNxN grid. The continuous 3D Fourier transform is replaced by discrete 3D Fast Fourier Transform (3D FFT).

2. We use regular polynomial interpolation (varying between second and sixth order of accuracy) in the 3D $(\omega_1,\omega_2,\omega_3)$-frequency space to evaluate transform values on an equally spaced Cartesian grid of points in the 2D $(\nu_1, \nu_2)$-frequency space.

3. The image $g(y_1,y_2)$ is obtained from the inverse 2D FFT.

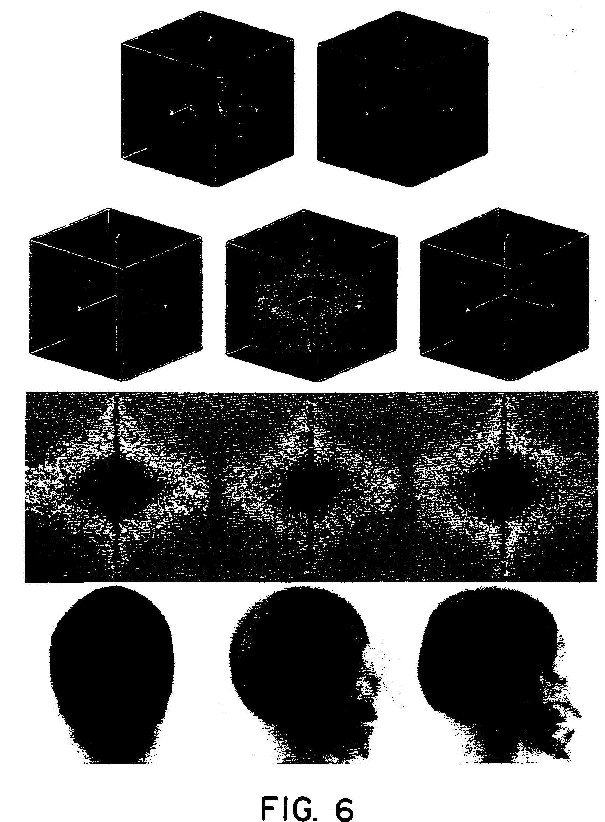

Figure 6 illustrates the basic steps of the method and its results for a complex example, a 3D data set of the attenuation of a human head.

Figure 6 is an example showing the relation between a 3D volume data set of a human head shown in an isosurface image in signal space, with the corresponding 3D Fourier transform (amplitude only) in frequency space (top), the orientation of the projection planes in the frequency space of the 3D Fourier transform (second row from top), the 2D Fourier transforms in the plane associated with the projection images (third row from top), and the projection images seen from several view angles (bottom).

This computational procedure involves large numbers of independent 1D FFT's (combined into 2D and 3D FFT's) and also data interpolations. Basically any programming language and any type of computer (including vector and parallel ones) can be used very effectively. The only significant constraint is the need for large amount of memory (to hold the a full 3D data set) and of disk space (to conveniently handle many data sets and images). The results presented here were obtained using C and Fortran 77 on an Ardent Titan graphics work station.

The FFT's can be implemented in different ways. The easiest is to use all complex arithmetic. If two 3D data sets are to be visualized, they can be placed as real and imaginary parts in the input to the transform and there is no loss in computational cost compared to the more involved implementation of all-real transforms. The same holds for the reconstruction of individual projections; all-real transforms are slightly more involved to implement, but save a factor of two in case only a single image is generated. In all cases, one has to note that most FFT codes order the data in a different way than what is natural in this algorithm (which assumes the frequency origin to be in the center of the data sets).

A key issue with regard to image quality is the interpolation step in frequency space. Fourth order of accuracy appears optimal; lower orders introduce noticeable artifacts in the projection images. While interpolation of higher orders than four may be more accurate in some instances, they can lead to "overshoots" which also degrade image quality (and they are also considerably more costly).

For each point of the image in transform space, the fourth order accurate interpolation was performed as a series of 1D interpolations in the three space directions (successively reducing the dimensionality of the interpolation problem). In the first direction, 16 1D interpolations were needed, in the second 4, and in the third 1; all extending over 4 data points. Within each of these three sets of interpolations, the point at which we wish to find the value lies in the same position relative to the data points. The fastest procedure is to determine (once only for each of the three cases) the weights to be applied to the data points. The algorithm given in B. Fornberg, <u>Mathematics of Computation</u> 51, 699 (1988), (in its special case of derivatives or order zero, i.e., interpolation) gives such weights very rapidly for any order of interpolation on any arbitrarily spaced grid. In the special case here (fourth order of accuracy and an equispaced grid), the calculation of the four weights can be reduced to a total of only 12 arithmetic operations (with another 4 multiplications and 3 additions to be performed each time the resulting interpolation formula is applied). Each image point (in transform space) is therefore obtained at a cost of 3 x 12 + (16+4+1) x 7 = 180 arithmetic operations.

Our present implementation is all-complex and uses 32 bit floating point arithmetic throughout to preserve dynamic range in the projection images. The final image brightness and contrast can be interactively manipulated to achieve the best visualization.

## ADVANTAGES

Fourier methods for projection volume rendering offer numerous opportunities for image enhancement and manipulation which are less feasible in ray tracing algorithms. Simple vector multiplication of the data while it "anyway" is in Fourier space, allows for example edge enhancement or smoothing (both requiring more elaborate convolutions in signal space). Rendering of separate images in red, green and blue allow color effects (however, not in combination with full opacity visualization). If also a grey-scale image is included for opacity, the four images can be run very effectively in two passes through an all-complex code.

The present method performs volume rendering at greatly increased speed, because of the reduced number of computations required.

In the near future, one can envision a class of computers which would be capable of performing our volume rendering method in real-time, so that the user may interactively choose the rotations, transformations, and scaling of the image while the computer generates them. Volume ray tracing is so computationally intense that users are required to generate a sequence of images for an animation in advance, storing these images in disk files for later display. If the rendering process happens quickly enough, less disk capacity is required, because no images must be stored for later display.

Filtering of the image can be manipulated in the frequency domain, requiring fewer computations than filtering in spatial domain, and allowing the user to take advantage simply of the vast experience available for application of appropriate filters for particular purposes.

Images can be rendered in full color by using a three-pass technique. In other words, the data set is rendered once using a lookup technique for each of the primary colors, red, green, and blue. The images can then be combined for later display.

Images can be obtained which highlight particular structural elements by remapping structural values to emphasize particular features. For examples dense regions of a medical image (bone), could be selectively rendered as transparent, in order to highlight less dense regions (tissues). This can also be done with ray tracing, but so slowly that it is more difficult to attempt several types of displays with alternate mappings, which may be necessary to produce the most useful image for diagnosis.

Geometric transformations on the data can be accomplished in FFT rendering by simply changing the shape and size of the interpolating plane. Changing the aspect ratio of the interpolating plane will stretch the resulting projection.

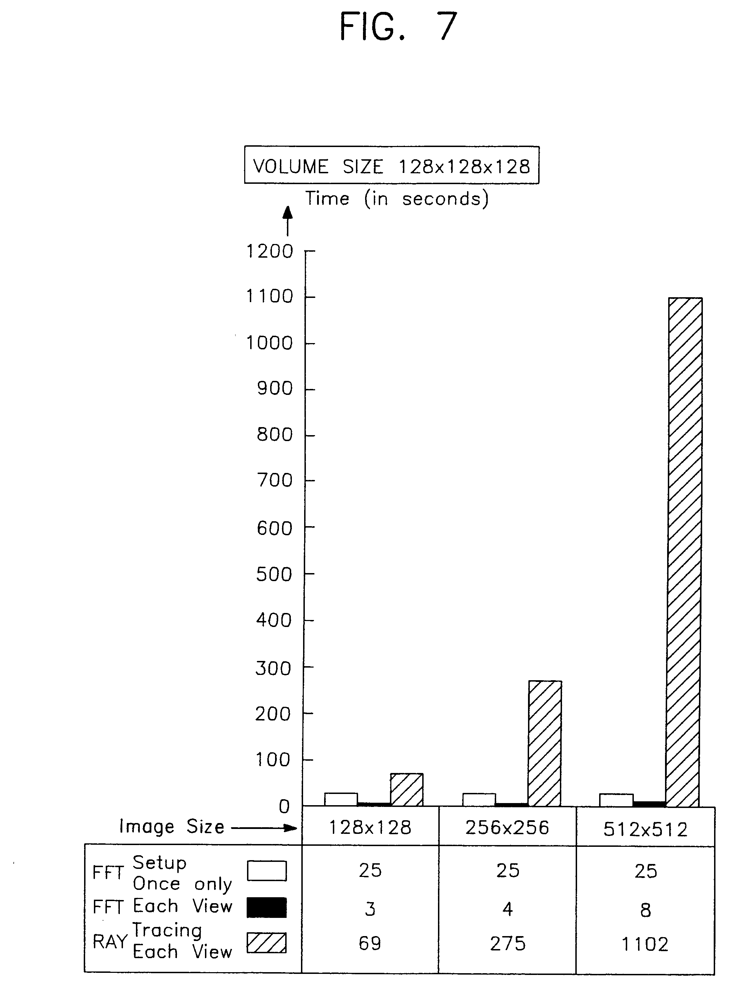

Figure 7 compares our current implementation of the Fourier projection rendering method with the corresponding ray-based method using a commercial visualization package implemented on a Stardent computer.

<u>APPENDIX</u> - Fourier-based projection volume rendering.

The underlying physical analog of projection volume rendering (PVR), transmission radiography, and the mathematics of implementing PVR using fast Fourier transform (FFT) methods can be stated as follows. Given an object with a variable attenuation coefficient $f(x_1,x_2,x_3)$ (where higher values correspond to less transparency; f 0 outside the object), generate the projected 2D image $g(y_1,y_2)$ corresponding to attenuation of an illuminating beam of uniform, plane parallel radiation passing through the object from a particular direction perpendicular to the image plane defined by axes $(y_1,y_2)$, as illustrated in Figure 4.

First we demonstrate the analog between a radiograph and the projection image. Consider a collimated beam of radiation with intensity I propagating along a ray s through an object with attenuation coefficient f. The intensity decays according to:

$$d \, I/ds = -If(x_1,x_2,x_3). \quad (A1)$$

For an object of finite size, the relation between the incident intensity, $I_0$, and the transmitted intensity $I_T$ is:

$$I_T = I_0 \exp(-\tau), \quad (A2)$$

where the optical depth $\tau$ is given by the line integral of the attenuation coefficient.

$$\tau = P = -\ln(I_T/I_0) = \int\limits_{\text{Path } s} f(x_1,x_2,x_3)\,ds. \quad (A3)$$

PVR generates a view of the object illustrating the attenuated intensity $I_T$ (or the attenuation optical depth $\tau$, often referred to as the projection, P, of f). Clearly, these are direct analogs of the attenuation image produced in an x-ray radiograph of the full 3D object. For instance, the 2D PVR image $g(y_1,y_2)$ of a 3D object $f(x_1,x_2,x_3)$ viewed along the $x_3$- axis is

$$g(y_1,y_2) = \int\limits_{-\infty}^{\infty} f(x_1,x_2,x_3)\,dx_3. \quad (A4)$$

Verification of the mathematics of PVR using Fourier methods for a continuous function involves three steps:

1. Verify the results if the viewing direction is along one of the axes, say in the $x_1$-direction and the $(y_1,y_2)$-directions are chosen to coincide with the $(x_2,x_3)$-directions (as in Figure 4). In general

$$\hat{f}(\omega_1,\omega_2,\omega_3) = \int\limits_{-\infty}^{\infty}\int\limits_{-\infty}^{\infty}\int\limits_{-\infty}^{\infty} f(x_1,x_2,x_3)e^{-2\pi i(\omega_1 x_1+\omega_2 x_2+\omega_3 x_3)}\,dx_1 dx_2 dx_3. \quad (A5)$$

For the alignment in Figure 4, $\omega_1 = 0$, $\omega_2 = v_1$, $\omega_3 = v_3$, $x_2 = y_1$, $x_3 = y_2$, so

$$\hat{f}(v_1,v_2) = \int\limits_{-\infty}^{\infty}\int\limits_{-\infty}^{\infty} f(x_1,y_1,y_2)e^{-2\pi i(v_1 y_1+v_2 y_2)}\,dx_1 dy_1 dy_2. \quad (A6)$$

and, therefore, the projected image, equation A4, is given by the inverse 2D Fourier transform:

$$\quad (A7)$$
$$g(y_1,y_2) = \int\limits_{-\infty}^{\infty} f(x_1,y_1,y_2)\,dx_1 = \int\limits_{-\infty}^{\infty}\int\limits_{-\infty}^{\infty} \hat{f}(v_1,v_2)e^{2\pi i(v_1 y_2+v_2 y_2)}\,dv_1 dv_2.$$

2. Instead of considering a fixed object viewed from different directions, consider the effect on the image if the body is rotated in an arbitrary way (and the viewing direction is kept fixed).

3. Show that however the body is rotated in $(x_1,x_2,x_3)$-apace, its Fourier transform simply undergoes an identical rotation in $(\omega_1,\omega_2,\omega_3)$ - frequency space, and similarly in 2D for rotations in the $(y_1,y_2)$- and $(v_1,v_2)$-spaces.

We first note that whatever the rotation is like in $(x_1,x_2,x_3)$-space, the new position can as well be obtained by a sequence of three separate rotations, performed consecutively around the $x_1$-, $x_2$- and $x_3$- axes. As these three directions appear in an entirely symmetric fashion in the formulas for the Fourier transform, it suffices to show that a rotation of $(x_1,x_2,x_3)$ through arbitrary angle $\theta$, say around the $x_3$-axis, causes the resulting Fourier transform

$$\hat{f}(\omega_1,\omega_2,\omega_3)$$

to undergo an identical rotation around the $\omega_3$-axis.

Consider a rotational transformation through an angle $\theta$, about the $x_3$-axis, from axes $x_1,x_2$ to axes $x_1',x_2'$:

$$x_1' = x_1 \cos\theta + x_2 \sin\theta \qquad\qquad x_1 = x_1' \cos\theta - x_2' \sin\theta$$

$$x_2' = x_1 \sin\theta + x_2 \cos\theta \qquad i.e. \qquad x_2 = x_1' \sin\theta - x_2' \cos\theta$$

$$x_3' = x_3 \qquad\qquad x_3 = x_3' \qquad\qquad\qquad (A8)$$

For the rotated object, the Fourier transform is:

$$\hat{f}\theta =$$

$$\int_{-\infty}^{\infty}\int_{-\infty}^{\infty}\int_{-\infty}^{\infty} f(x_1\cos\theta+x_2\sin\theta,-x_1\sin\theta+x_2\cos\theta,x_3)e^{-2\pi i(\omega_1+x_1+\omega_2 x_2+\omega_3 x_3)}dx_1 dx_2 dx_3 =$$

$$\int_{-\infty}^{\infty}\int_{-\infty}^{\infty}\int_{-\infty}^{\infty} f(x_1',x_2',x_3')e^{-2\pi i[\omega_1(x_1'\cos\theta-x_2'\sin\theta)+\omega_2(x_1'\sin\theta+x_2'\cos\theta)+\omega_3 x_3']}dx_1'dx_2'dx_3' =$$

$$\int_{-\infty}^{\infty}\int_{-\infty}^{\infty}\int_{-\infty}^{\infty} f(x_1',x_2',x_3')e^{-2\pi i[\omega_1(x_1\cos\theta+\omega_2\sin\theta)+\omega_2(\omega_1\sin\theta+\omega_2\cos\theta)+\omega_3 x_3']}dx_1'dx_2'dx_3'.$$

So, rotation of the object in physical space produces an equivalent rotation of the Fourier transform in frequency space,

$$\hat{f}_\Theta = \hat{f}(\omega_1\cos\Theta + \omega_2\sin\Theta, -\omega_1\sin\Theta + \omega_2\cos\Theta, \omega_3). \qquad (A10)$$

This completes the derivation, demonstrating that projection images of 3D objects seen from various view angles can be obtained from 2D slices of the object's 3D Fourier transform, where the geometry associated with the orientation of the projection plane defined by the view angle maps directly from signal space to frequency space.

The derivation described above refers to continuous functions whose Fourier transforms can be computed by integrals over the range of integration $\pm\infty$. It is mathematically exact. However, in practical computational applications, we deal with finite data sets defined on uniform Cartesian grids. The approximate algorithm, based on the Discrete Fourier Transform (DFT), is best implemented using some variation of the Fast Fourier Transform (FFT). For completeness we indicate the DFT formulation below.

The implementation is easiest to describe in the case of a function defined at an odd number of points, say 2N+1, in each spatial direction (well-known procedures to treat the "reflection frequency" allow very effective use of fast even-number-of-point FFTs). We assume that the attenuation function, $F(x_1,x_2,x_3)$, is available and takes the values $F_{lmn}$ at equally spaced lattice points,

$$x_{1,1} = 1\Delta x, x_{2,m}, x_{3,n} = n\Delta x, \qquad l,m,n = -N,\ldots -1,0,1,\ldots,N \qquad (A11)$$

throughout a cube of physical extent $-L\leq x_1,x_2,x_3\leq L$, with $\Delta x=2L/(2N+1)$. At equally spaced points in frequency space, $(\omega_1,\omega_2,\omega_3)$, labeled by $\alpha$, $\beta$, $\gamma$, i.e.

$$\omega_{1,\alpha} = \alpha\Delta\omega, \omega_{2,\beta} = \beta\Delta\omega, \omega_{3,\gamma} = \gamma\Delta\omega, \qquad \alpha,\beta,\gamma = -N,\ldots -1,0,1,\ldots,N \qquad (A12)$$

the 3D DFT of this data,

$$\hat{F}(\omega_1,\omega_2,\omega_3) = \hat{F}_{\alpha\beta\gamma},$$

is given by

$$\hat{F}_{\alpha\beta\gamma} = (2N+1)^{-3/2}\sum_{l=-N}^{N}\sum_{m=-N}^{N}\sum_{n=-N}^{N} F_{lmn}e^{-2\pi(1\alpha+m\beta+n\gamma)/(2N+1)}. \qquad (A13)$$

The function of

$$\hat{F}_{\alpha\beta\gamma}$$

8

is (2N+1)-periodic in each of its three arguments. It provides samples of $\hat{F}$ over the frequency interval $-\Omega \leqq \omega_1, \omega_2, \omega_3 \leqq \Omega$. Where $\Omega = 1/(2\Delta x)$, $\Delta \omega = 2Q/(2N+1)$. The FFT algorithm gives computes $\hat{F}$ at all its integer arguments at a total coast of $O(N^3 \log N)$ operations.

The projection image is given by the inverse DFT of a planar section of $\hat{F}$, where the coefficients of the 2D DFT are obtained by straightforward interpolation (typically of locally second or fourth order of accuracy) at equally spaced Cartesian points in a 2D lattice, passing through the origin in frequency space, parallel to the viewing plane. For frequency space and signal space coordinates given by

$$\eta_{1,\mu} = \mu \Delta \eta, \qquad \eta_{2,\nu} = \nu \Delta \eta \qquad \mu, \nu = -M, ...., -1, 0, 1, ..., M, \quad (A14)$$
$$y_{1,j} = j \Delta y, \qquad y_{2,k} = k \Delta y \qquad j, k = -M, ...., -1, 0, 1..., M, \quad (A15)$$

with $M\Delta\eta \leqq \Omega$, $\Delta y \Delta \eta = 1/(2M+1)$, the discrete projection image $G_{jk}$ is obtained from the discrete 2D Fourier transform $F_{\mu\nu}$, by evaluating the inverse FFT:

$$G_{jk} = \frac{1}{2M+1} \sum_{\mu=-M}^{M} \sum_{\nu=-M}^{M} \hat{F}_{\mu\nu} e^{2\pi i (j\mu + k\nu)/(2M+1)} \qquad (A16)$$

The number of operations required to evaluate these two steps are $O(M^2)$, interpolation, and $O(M^2 \log M)$, inverse FFT.

## Claims

1. A method for producing, on a display device, a projected two-dimensional representation of a three-dimensional data set comprising:

   a. storing three-dimensional signal patterns, $f(x_1, x_2, x_3)$, said signal patterns representing the values of at least one physical property associated with a three-dimensional body at regularly spaced grid locations within said body;

   b. performing a discrete three-dimensional fast Fourier transform of the object to obtain

   $$\hat{f}(\omega_1, \omega_2, \omega_3)$$

   where $\omega_1, \omega_2, \omega_3$ are orthogonal coordinates in frequency space corresponding to $x_1, x_2, x_3$ in signal space;

   c. determining

   $$\hat{f}(\nu_1, \nu_2)$$

   where $\nu_1$ and $\nu_2$ are orthogonal coordinates in a plane going through origin in $\omega_1$, $\omega_2$, $\omega_3$ (frequency space) and the plane $\nu_1, \nu_2$ is parallel to the projection plane in physical space;

   d. performing an inverse discrete 2D fast Fourier transform on the function

   $$\hat{f}(\nu_1, \nu_2)$$

   to obtain $g(y_1, y_2)$, the desired image (with the coordinate directions for $y_1$ and $y_2$ parallel to the ones chosen in the $\nu_1, \nu_2$-plane), and

   e. displaying said image on a two-dimensional display device.

2. A method as claimed in claim 1, wherein said steps c, d, and e are performed to create a series of images at a sequence of view angles from said 3D Fourier coefficients.

3. A method as claimed in claim 1 or 2, wherein said image is filtered in the frequency domain.

4. A system for producing, on a display device, a projected two-dimensional representation of a three-dimensional data set comprising:

   a. means for storing three-dimensional signal patterns, $f(x_1, x_2, x_3)$, said signal patterns representing the values of at least one physical property associated with a three-dimensional body at regularly spaced grid locations within said body;

b. means for performing a discrete 3D fast Fourier transform of the object to obtain

$$\hat{f}(\omega_1, \omega_2, \omega_3),$$

where $\omega_1, \omega_2, \omega_3$ are orthogonal coordinates in frequency space corresponding to $x_1, x_2, x_3$ in signal space;

c. means for determining

$$\hat{f}(\nu_1, \nu_2)$$

where $\nu_1$ and $\nu_2$ are orthogonal coordinates in a plane going through origin in $\omega_1$, $\omega_2$, $\omega_3$ (frequency space) and the plane $\nu_1, \nu_2$ is parallel to the projection plane in physical space;

d. means for performing an inverse discrete 2D fast Fourier transform on the function

$$\hat{f}(\nu_1, \nu_2)$$

to obtain $g(y_1, y_2)$, the desired image (with the coordinate directions for $y_1$ and $y_2$ parallel to the ones chosen in the $\nu_1, \nu_2$-plane), and

e. means for displaying said image on a two-dimensional display device.

5. A system as claimed in claim 4, wherein said image is filtered in the frequency domain.

FIG. I

FIG. 2

FIG. 3

FIG. 4

$f(x_1, x_2, x_3)$

$g(y_1, y_2)$

$y_1$

$y_2$

$x_1$

$x_2$

$x_3$

FIG. 5

$f(x_1, x_2, x_3)$

$f(w_1, w_2, w_3)$

$\hat{f}(v_1, v_2)$

$g(y_1, y_2)$

FIG. 6

# FIG. 7

VOLUME SIZE 128x128x128

Time (in seconds)

| Image Size | 128x128 | 256x256 | 512x512 |
|---|---|---|---|
| FFT Setup Once only ☐ | 25 | 25 | 25 |
| FFT Each View ■ | 3 | 4 | 8 |
| RAY Tracing Each View ▨ | 69 | 275 | 1102 |

# FIG. 8